# EUROPÄISCHE PATENTANMELDUNG

(11) **EP 0 794 624 A2**
(43) Veröffentlichungstag der Anmeldung: **10.09.1997**
(21) Anmeldenummer: 97103167.9
(22) Anmeldetag: 26.02.1997
(51) Int. Cl.: H04B 10/207

(54) **Vorrichtung zur Ansteuerung von Elementen einer Maschine, Vorzugsweise einer Bearbeitungsmaschine**

(30) Priorität: 05.03.1996 DE 19608335
(71) Anmelder: Gebr. Heller Maschinenfabrik GmbH, D-72622 Nürtingen (DE)
(72) Erfinder:
(74) Vertreter: Jackisch-Kohl, Anna-Katharina

(57) **Zusammenfassung**

Die Vorrichtung hat eine Steuerung, die mit den anzusteuernden Elementen (3) über einen CAN-Bus (9') verbunden ist. Mit dem CAN-Bus (9') werden Daten zur Ansteuerung der Elemente (3) übertragen. Sie sind über jeweils zwei optische Übertragungsstrecken (7) an einen Sternknoten (8) angeschlossen, der mit der Steuerung (2) verbunden ist. Vor dem Eingang in die Elemente (3) werden die Daten durch einen Verstärker (18, 23) verstärkt, um wenigstens teilweise einen Ausgleich der Lichtleistungsdämpfung zu erreichen. Dadurch steht am Eingang der anzusteuernden Elemente (3) die gewünschte Lichtleistung zur Verfügung. Die Übertragungsstrecken für die Daten können sehr groß sein, beispielsweise 60 m und mehr betragen.

## Beschreibung

Die Erfindung betrifft eine Vorrichtung zur Ansteuerung von Elementen einer Maschine, vorzugsweise einer Werkzeugmaschine, nach dem Oberbegriff des Anspruches 1.

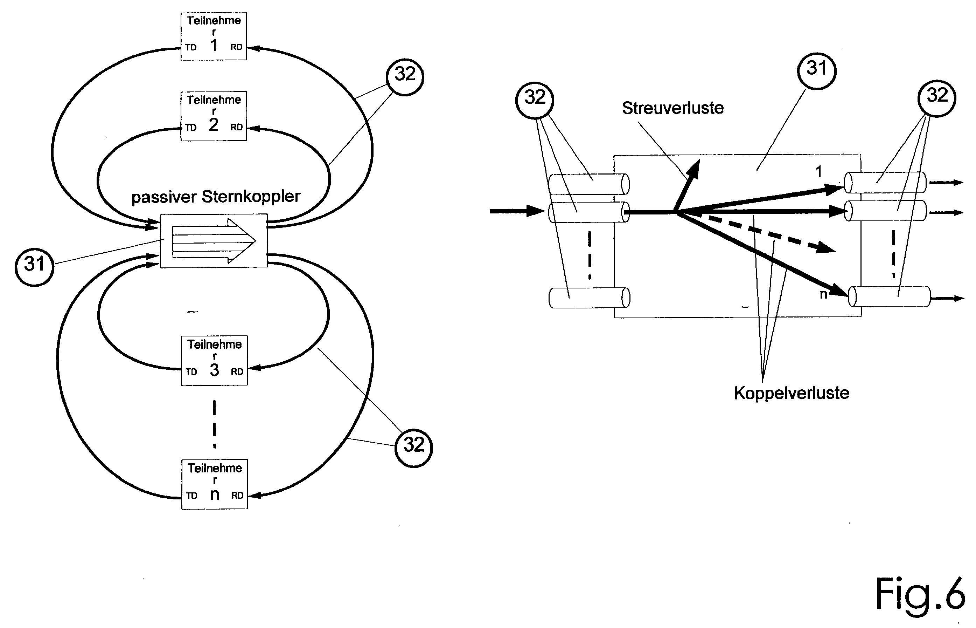

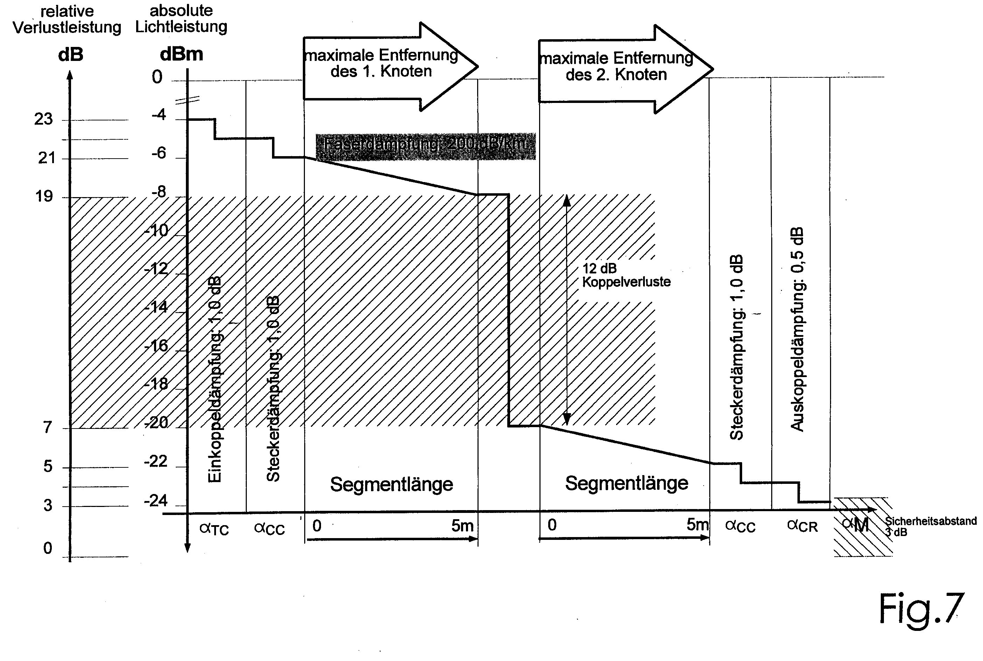

Bei Maschinen, insbesondere bei Werkzeugmaschinen, ist es bekannt, mit der Maschinensteuerung die verschiedenen Elemente der Maschine, wie Pumpen, Motoren, Hydraulikventile, Weggeber und dergleichen, anzusteuern. Hierfür ist ein serielles Datenbussystem in Form des CAN-Systems (Controller Area Network) vorgesehen. Wie Fig. 6 zeigt, hat dieses Bussystem einen passiven Sternkoppler 31, an den über Lichtleiter 32 Teilnehmer 1 bis n angeschlossen sind. Das CAN-System zeichnet sich dadurch aus, daß jeder Teilnehmer mit jedem anderen kommunizieren kann. Im Sternkoppler 31 treten verhältnismäßig hohe Verluste auf, die in der Größenordnung von etwa 11 bis 14 dB liegen. In Fig. 7 ist die Abhängigkeit der absoluten Lichtleistung bzw. der relativen Verlustleistung von der Länge der Lichtleiter 32 dargestellt. Es ist erkennbar, daß innerhalb des Sternkopplers 8 aufgrund von Streu- und Koppelverlusten die absolute Lichtleistung abnimmt. Innerhalb des Lichtleiters 31 treten aufgrund der Faserdämpfung zusätzlich Verluste auf. Aus diesem Grunde sind die Übertragungslängen für die zu übertragenden Daten auf beispielsweise etwa 5 m begrenzt. Wie Fig. 7 beispielhaft zeigt, betragen die Einkoppel- und die Steckerdämpfung jeweils 1 dB. Die Faserdämpfung des Lichtleiters 32 liegt typischerweise in der Größenordnung von 200 dB/km. Um eine sichere Datenübertragung zu gewährleisten, ist aus diesem Grunde die Übertragungslänge im dargestellten Ausführungsbeispiel auf 5 m begrenzt. Die Koppelverluste im Sternkoppler 38 sind sehr hoch und liegen, wie Fig. 7 beispielhaft zeigt, bei 12 dB.

Der Erfindung liegt die Aufgabe zugrunde, die gattungsgemäße Vorrichtung so auszubilden, daß mit dem CAN-Bus große Übertragungsstrecken bei sicherer Datenübertragung möglich sind.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung sind die anzusteuernden Elemente jeweils über zwei optische Übertragungsstrecken an den Sternknoten angeschlossen, der seinerseits mit der Steuerung verbunden ist. Um große Übertragungsstrecken bei sicherer Datenübertragung zu ermöglichen, werden die zu übertragenden Daten vor ihrem Eingang in das jeweilige Element durch den Verstärker so verstärkt, daß die auf dem Übertragungsweg wirkende Lichtleistungsdämpfung zumindest teilweise wieder aufgehoben wird. Dadurch steht am Eingang der anzusteuernden Elemente die gewünschte Lichtleistung zur Verfügung. Die Übertragungsstrecken für die Daten können infolge der erfindungsgemäßen Ausbildung sehr groß sein, beispielsweise 60 m und mehr betragen.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine erfindungsgemäße, als Maschine ausgebildete Vorrichtung,
- Fig. 2: in schematischer Darstellung ein CAN-System mit einem Sternkoppler der erfindungsgemäßen Vorrichtung,
- Fig. 3: in schematischer Darstellung das CAN-System der erfindungsgemäßen Vorrichtung,
- Fig. 4: ein Blockschaltbild des optischen Sternkopplers gemäß den Fig. 2 und 3,
- Fig. 5: in einem Diagramm die absolute Lichtleistung bzw. die relative Verlustleistung im CAN-System in Abhängigkeit von der Übertragungslänge,
- Fig. 6: einen passiven Sternkoppler für ein Datenbussystem CAN bekannter Bauart,
- Fig. 7: ein Diagramm entsprechend Fig. 5 bei Einsatz des bekannten passiven Sternkopplers gemäß Fig. 6.

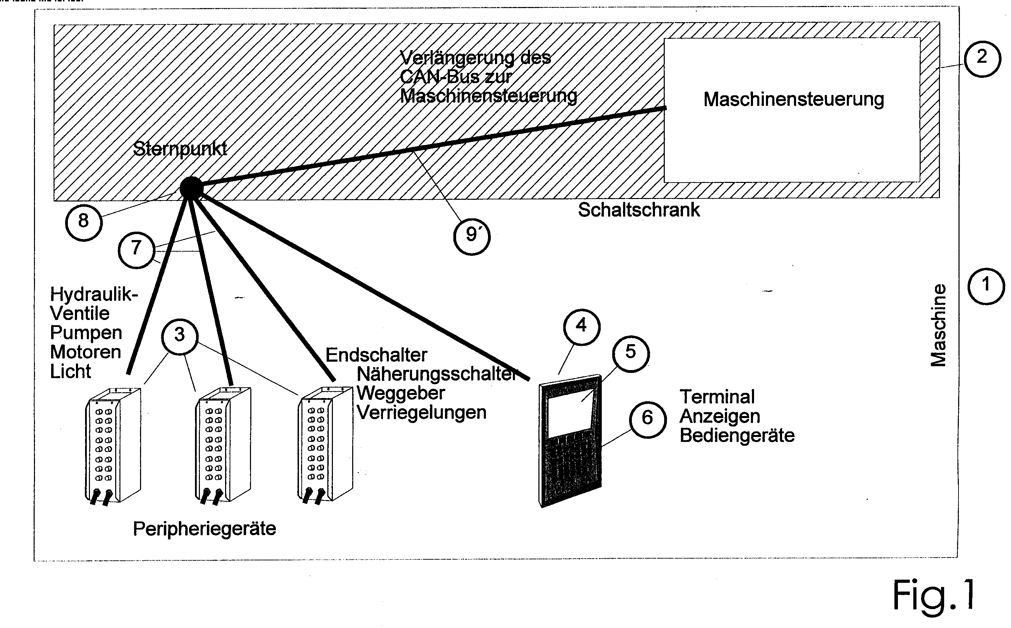

Fig. 1 zeigt in schematischer Darstellung eine Maschine 1, die eine Be- oder auch eine Verarbeitungsmaschine sein kann. Sie hat eine Maschinensteuerung 2, mit der unterschiedlichste Aggregate und Elemente angesteuert werden können. In Fig. 1 sind beispielhaft anzusteuernde Peripheriegeräte 3 angegeben, die Hydraulikventile, Pumpen, Motoren, Licht, Endschalter, Näherungsschalter, Weggeber, Verriegelungen und dergleichen sein können. An der Maschine 1 ist außerdem ein Terminal 4 mit wenigstens einer Anzeige 5 und Bedienelementen 6 vorgesehen.

Die Peripheriegeräte 3 sind über jeweils zwei Lichtleiter 7 an einen Sternpunkt 8 angeschlossen, an den auch die Maschinensteuerung 2 angeschlossen ist. Die verschiedenen Peripheriegeräte 3 sind mittels eines seriellen Datenbusses CAN (Controller Area Network) miteinander vernetzt. Die Verbindung des Sternpunktes 8 mit der Steuerung 2 erfolgt über einen solchen CAN-Bus 9'. Über den CAN-Bus können die Peripheriegeräte 3 miteinander in noch zu beschreibender Weise kommunizieren.

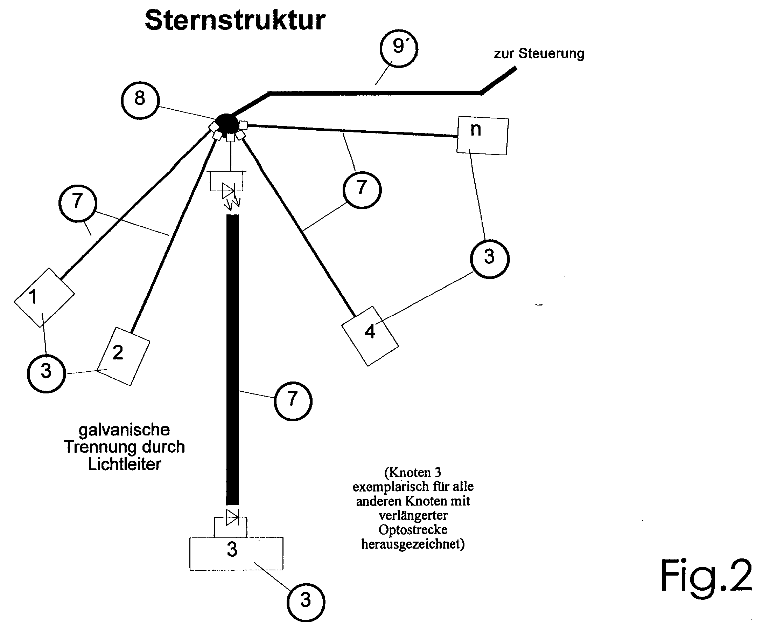

Fig. 2 zeigt den grundsätzlichen Aufbau einer Sternstruktur unter Einsatz des Sternpunktes 8. An ihn sind die Lichtleiter 7 angeschlossen, welche den Sternpunkt 8 mit den jeweiligen Peripheriegeräten 3 verbinden. Die galvanische Trennung zwischen dem jeweiligen Peripheriegerät 3 und dem Sternpunkt 8 erfolgt durch den Lichtleiter 7.

Anstelle der Peripheriegeräte 3 können weitere Sternknoten vorgesehen sein, von denen wiederum mehrere Lichtleiter zu weiteren Sternknoten und/oder Peripheriegeräten führen.

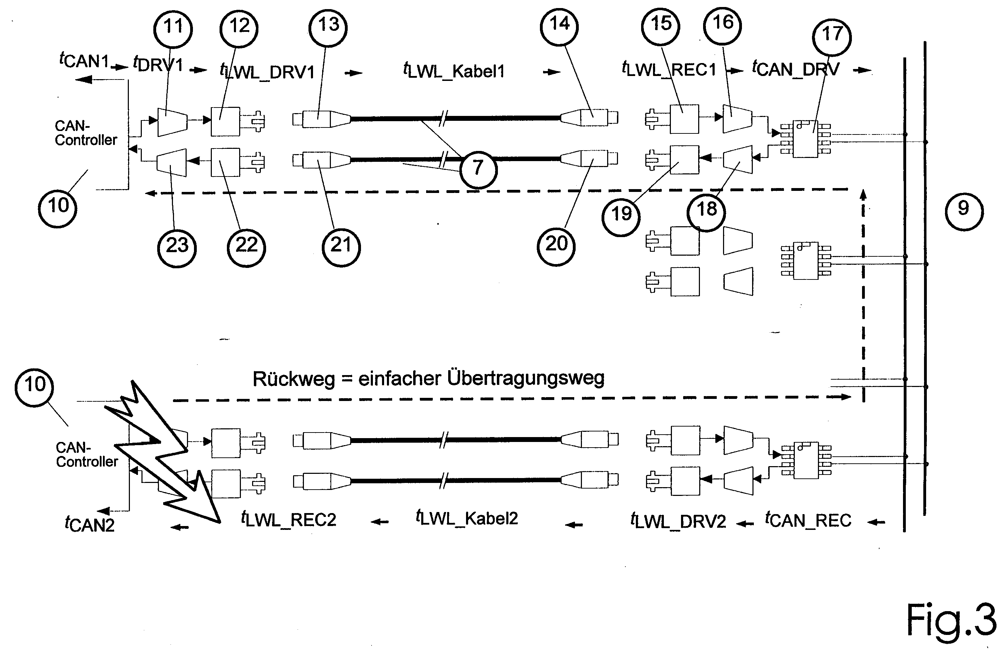

Jedes Peripheriegerät 3 oder jeder Sternknoten hat einen CAN-Controller 10 (Fig. 3), dessen Ausgang über ein Anpassungselement 11, vorzugsweise ein CMOS-Gatter, mit einem E/O-Wandler 12 verbunden ist, welcher die vom CAN-Controller kommenden elektrischen Signale in optische Signale umwandelt. An den E/O-Wandler ist mit einem Stecker 13 das eine Ende des Lichtleiters 7 angeschlossen, dessen anderes Ende über einen Stecker 14 an einen O/E-Wandler 15 angeschlossen ist. Er wandelt die optischen Signale wieder in elektrische Signale um. Solche E/O- bzw. O/E-Wandler sind bekannt.

Über ein Anpassungselement 16, das vorzugsweise ein CMOS-Gatter ist, ist der O/E-Wandler 15 mit einem Bus-Ankoppler 17 verbunden, der an den CAN-Bus 9 angeschlossen ist. Dieser im Sternpunkt 8 vorgesehene CAN-Bus 9 kann als virtueller CAN-Bus angesehen werden, da er nicht als Leitung ausgebildet, sondern als nur kurze Leiterbahn auf einer (nicht dargestellten) Platine ausgebildet ist.

Der CAN-Controller 10 hat auch einen Eingang, der mit dem Bus-Ankoppler 17 verbunden ist. Die vom CAN-Bus 9 und vom Bus-Ankoppler 17 kommenden Signale werden über ein Anpassungselement 18, vorzugsweise ein CMOS-Gatter, einem E/O-Wandler 19 zugeführt, der die elektrischen in optische Signale umwandelt. An diesen Wandler ist über einen Stecker 20 das eine Ende des Lichtleiters 7 angeschlossen, dessen anderes Ende über einen Stecker 21 mit einem O/E-Wandler 22 verbunden ist. Er wandelt die optischen wieder in elektrische Signale um, die über ein Anpassungselement 23, vorzugsweise ein CMOS-Gatter, dem entsprechenden Eingang des CAN-Controllers zugeführt werden.

Auf die beschriebene Weise sind sämtliche Peripheriegeräte 3 oder Sternkoppler mit dem CAN-Bus 9 über die jeweiligen Lichtleiter 7 verbunden. Als Lichtleiter 7 wird den vorteilhaft POF (Plastic Optical Fiber) verwendet.

Bei der CAN-Datenübertragung wird der Inhalt einer Nachricht, zum Beispiel die Drehzahl eines Motors oder einer Spindel, durch einen netzweit eindeutigen Identifier gekennzeichnet. Neben dieser Inhaltskennzeichnung legt der Identifier auch die Priorität der zu übersendenden Nachricht fest. Dies ist für die Buszuteilung entscheidend, wenn mehrere Peripheriegeräte um den Bus 9 konkurrieren.

Soll von der Steuerung 2 eine Nachricht an eines oder mehrere der Peripheriegeräte 3 gesendet werden, so übergibt die CPU der Steuerung 2 die zu übertragenden Daten und deren Identifier mit einer Übertragungsanforderung an den zugeordneten CAN-Baustein der Steuerung 2. Die Bildung und Übertragung der Nachricht übernimmt dieser CAN-Baustein, der in den Zeichnungen nicht dargestellt ist, für sich aber bekannt ist. Sobald die Steuerung 2 die Buszuteilung bekommt, werden alle Peripheriegeräte 3 diese Nachricht empfangen. Mit einer Akzeptanzprüfung stellen alle Peripheriegeräte im Netzwerk nach korrektem Empfang der Nachricht anhand des mit übersandten Identifiers fest, ob die empfangenen Daten für sie relevant sind oder nicht. Sind die Daten für das jeweilige Peripheriegerät 3 von Bedeutung, werden sie weiterverarbeitet, ansonsten ignoriert.

Die Priorität, mit der Daten vor anderen, weniger wichtigen Daten übertragen werden, wird durch den Identifier der jeweils zu übertragenden Daten festgelegt. Die Prioritäten werden durch entsprechende Binärwörter vergeben. So besitzt beispielsweise von zwei unterschiedlichen Binärvörtern dasjenige die höhere Priorität, dessen Wert, als Binärzahl betrachtet, beispielsweise niedriger ist. Dann werden nur diese Daten vom jeweiligen Peripheriegerät 3 empfangen.

Wenn mehrere Daten von unterschiedlichen Peripheriegeräten zum gleichen Zeitpunkt für eine Übertragung anstehen, erfolgt die Buszuteilung mittels bitweiser Arbitrierung über die jeweiligen Identifier. Diese Arbitrierung ist beim CAN-Datenbussystem bekannt und wird darum nur kurz erläutert. Jedes Peripheriegerät 3 und auch die Steuerung 2 beobachten Bit für Bit den jeweiligen Buspegel, der rezessiv oder dominant sein kann. Der dominante Zustand, der logisch 0 entspricht, überschreibt den rezessiven Zustand, der logisch 1 entspricht. Darum verlieren alle diejenigen Peripheriegeräte 3 bzw. die Steuerung 2 den Wettstreit um die Buszuteilung, die rezessiv senden, auf dem jeweiligen Bus aber dominant beobachten. Diese Peripheriegeräte bzw. die Steuerung 2 verlieren ihre Arbitrierung und werden Empfänger. Lediglich dasjenige Peripheriegerät 3 oder die Steuerung 2 setzt sich durch und be- bzw. erhält den Buszugang und kann Daten absetzen, das dominant sendet und auf dem Bus rezessiv beobachtet. Alle anderen Peripheriegeräte 3 sind dann automatisch Empfänger dieser Daten und versuchen erst dann wieder, ihre Daten zu senden, wenn der Bus frei ist.

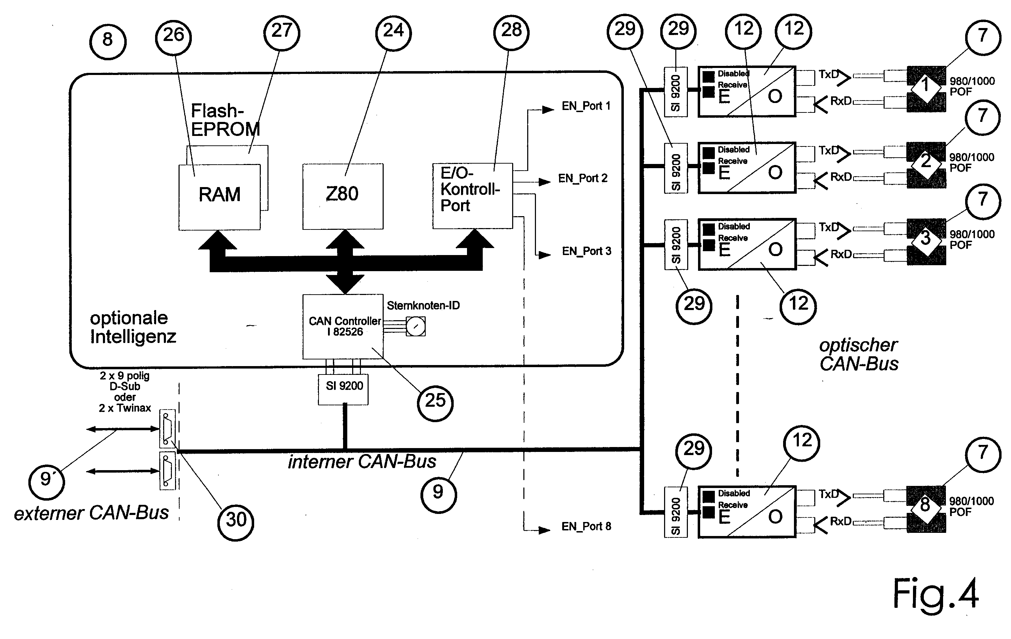

Der Sternpunkt 8 bzw. Sternkoppler hat, wie Fig. 4 zeigt, einen Mikroprozessor 24, der mit einem CAN-Controller 25 verbunden ist. An den Mikroprozessor 24 sind ein RAM-Speicher 26 sowie ein EPROM 27, vorzugsweise ein Flash-EPROM, angeschlossen. Im EPROM 27 befindet sich das Grundprogramm sowie eventuelle Zuweisungen und Befehle. Der RAM-Speicher 27 bildet den Arbeitsspeicher des Sternkopplers 8. Der Mikroprozessor 24 ist außerdem mit einem E/O-Kontrollport 28 verbunden, an den mit EN_Port 1 bis 8 bezeichnete Ein- und Ausschalter für die E/O-Wandler 12 angeschlossen sind. An diese Wandler sind die Lichtleiter 7 angeschlossen, wie anhand von Fig. 3 erläutert worden ist. Die Wandler 12 sind jeweils über einen Schnittstellenbaustein 29 an den internen CAN-Bus 9 des Sternkopplers 8 angeschlossen. Auch der CAN-Controller 25 ist über den Schnittstellenbaustein 29 an den internen CAN-Bus 9 angeschlossen. Über eine Schnittstelle 30 kann der verlängerte CAN-Bus 9' (Fig. 1) an den CAN-Bus 9 angeschlossen werden.

Der CAN-Controller 25 erhält einen Sternknoten-ID, so daß ihm ein entsprechender Sternknoten zugeordnet ist.

Über die als verlängerter CAN-Bus ausgebildete Steuerleitung 9' wird in den Sternkoppler 8 über den internen CAN-Bus 9 und den CAN-Controller 25 eine Zuweisungstabelle geladen, anhand welcher der optische Sternkoppler 8 eine entsprechende Zuordnung zu den anzusteuernden Peripheriegeräten 3 feststellen kann. Über den internen CAN-Bus 9 erfolgt eine Adressierung der verschiedenen E/O-Wandler 12, die außerdem mittels des E/O-Kontrollports 28 im erforderlichen Maße ein- bzw. ausgeschaltet werden können.

Bei der Steuerung können ein externer CAN-Bus, der durch den verlängerten CAN-Bus 9' gebildet wird, der interne CAN-Bus 9 sowie der optische CAN-Bus unterschieden werden, der durch die verschiedenen Lichtleiter 7 gebildet wird.

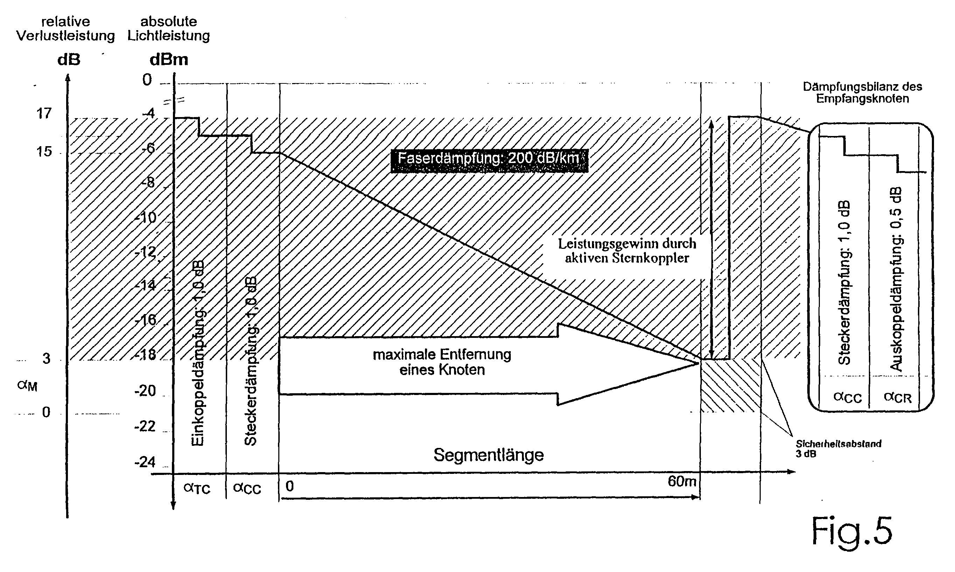

Die über den CAN-Bus 9' von der Maschinensteuerung 2 gelieferten Daten werden dem optischen Sternkoppler 8 zugeführt. Von hier aus werden die Daten über die Lichtleiterkabel zu den angeschlossenen Peripheriegeräten 3 geführt, wobei in der zuvor beschriebenen Weise die Daten identifiziert und arbitriert werden. Da mit zunehmendem Übertragungsweg die Lichtleistung abnimmt, ist bei der beschriebenen Steuerung eine Maßnahme vorgesehen, mit der die Lichtleistung auch bei langen Übertragungsstrecken, die beispielsweise 60 m und mehr betragen können, so hoch ist, daß eine einwandfreie, zuverlässige Datenübertragung gewährleistet ist. Hierfür sind die Anpassungselemente 18, 23 vorgesehen, die als Verstärker dienen. Wie sich aus Fig. 5 ergibt, nimmt die Lichtleistung mit zunehmendem Übertragungsweg ab. Insbesondere innerhalb des Lichtleiters 7 findet eine erhebliche Abnahme der Lichtleistung statt. Bei langen Übertragungsstrecken von beispielsweise etwa 60 m würde ohne die Verstärkerelemente 18, 23 eine zuverlässige Datenübertragung nicht möglich sein. Die Verstärker 18, 23 des aktiven Sternkopplers 8 sorgen dafür, daß die Lichtleistung nach einer langen Übertragungsstrecke auf das gewünschte Niveau angehoben wird. Dieses Niveau kann beispielsweise das Ausgangsniveau oder auch ein höheres Niveau sein. Dadurch ist sichergestellt, daß die Daten ohne Fehler zu den jeweiligen Empfängern, den Peripheriegeräten 3, gelangen. Damit die zu übertragenden Daten zum Zeitpunkt des Verstärkens noch nicht zu weit abgeschwächt sind, ist ein sogenannter Sicherheitsabstand zu einer maximal negativen absoluten Lichtleistung vorgesehen, der beispielsweise 3 dB betragen kann. Auf diese Weise ist sichergestellt, daß zum Zeitpunkt des Verstärkens die Daten noch keine Fehler aufweisen. Aufgrund der Verstärkungsmaßnahme im Sternkoppler 8 können äußerst lange Übertragungswege für die Daten im CAN-Bus vorgesehen werden, die beispielsweise bis zu 60 m betragen können. Trotz dieser großen Übertragungslängen werden die jeweiligen Daten einwandfrei übertragen, so daß sichergestellt ist, daß die angesprochenen Peripheriegeräte 3 in der gewünschten Weise arbeiten. Über den beschriebenen CAN-Bus kann auch die Steuerung 2 selbst entsprechende Daten, beispielsweise in Form von Rückmeldungen von Peripheriegeräten 3, erhalten. Ist beispielsweise ein Peripheriegerät 3 eine drehbar angetriebene Arbeitsspindel einer Werkzeugmaschine, so kann die Arbeitsspindel beispielsweise Daten über ihre Drehzahl, über die Arbeitstemperatur oder dergleichen über den CAN-Bus an die Steuerung 2 zurücksenden, in welcher diese Daten ausgewertet und eventuell zu einer Nachregelung des entsprechenden Peripheriegerätes herangezogen werden können.

Die Lichtleiter 7 haben typischerweise eine Faserdämpfung von etwa 200 dB/km. Diese hohe Faserdämpfung würde sich ohne die beschriebene Ausbildung des CAN-Busses nachteilig auf die Datenübertragung auswirken. Insbesondere könnten große Übertragungsstrecken nicht verwendet werden. Aufgrund der Verstärkerelemente 18, 23 wird der Sternkoppler 8 zu einem aktiven Element, mit dem die Lichtleistung und damit die Übertragungsleistung optimal verstärkt wird, so daß auch bei großen Übertragungsstrecken eine zuverlässige Datenübertragung sichergestellt ist.

Werden die Daten beispielsweise von einem aktiven Sternkoppler 8 zu einem anderen aktiven Sternkoppler übertragen, dann können aufgrund der Verstärkung der jeweiligen Lichtleistung bei jedem aktiven Sternkoppler wesentlich größere Übertragungsstrecken verwendet werden. Auf diese Weise ist es beispielsweise in Maschinenhallen in einfacher Weise möglich, von einer zentralen Maschinensteuerung aus sämtliche Maschinen in der Halle bzw. deren jeweilige Elemente mittels des beschriebenen CAN-Busses zuverlässig anzusteuern.

Die Lichtleiter 7 können Glasfaserkabel oder POF (Plastic Optical Fiber)-Kabel sein. Es ist aber auch möglich, als optische Übertragungsstrecke 7 eine optische Richtstrecke, vorzugsweise Laser, zu verwenden.

## Patentansprüche

1. Vorrichtung zur Ansteuerung von Elementen einer Maschine, insbesondere einer Werkzeugmaschine, mit einer Steuerung, die mit den Elementen über wenigstens einen CAN-Bus verbunden ist, mit dem Daten zur Ansteuerung der Elemente übertragbar sind,
dadurch gekennzeichnet, daß die Elemente (3) über jeweils zwei optische Übertragungsstrecken (7) an einen Sternknoten (8) angeschlossen sind, der mit der Steuerung (2) verbunden ist, und daß die Daten vor dem Eingang in die Elemente (3) durch wenigstens einen Verstärker (18, 23) zum wenigstens teilweisen Ausgleich der Lichtleistungsdämpfung verstärkt werden.

2. Vorrichtung nach Anspruch 1,
dadurch gekennzeichnet, daß der Verstärker (18) einem E/O-Wandler (19) vorgeschaltet ist.

3. Vorrichtung nach Anspruch 2,
dadurch gekennzeichnet, daß an den E/O-Wandler (19) das eine Ende der optischen Übertragungsstrecke (7) mit einem Stecker (20) angeschlossen ist.

4. Vorrichtung nach einem der Ansprüche 1 bis 3,
dadurch gekennzeichnet, daß der Verstärker (23) einem O/E-Wandler (22) nachgeschaltet ist.

5. Vorrichtung nach Anspruch 4,
dadurch gekennzeichnet, daß an den O/E-Wandler (22) das andere Ende der optischen Übertragungsstrecke (7) mit einem Stecker (21) angeschlossen ist.

6. Vorrichtung nach einem der Ansprüche 1 bis 5,
dadurch gekennzeichnet, daß die optische Übertragungsstrecke (7) durch ein Glasfaser-Kabel gebildet ist.

7. Vorrichtung nach einem der Ansprüche 1 bis 5,
dadurch gekennzeichnet, daß die optische Übertragungsstrecke (7) durch ein POF-Kabel gebildet ist.

8. Vorrichtung nach einem der Ansprüche 1 bis 5,
dadurch gekennzeichnet, daß die optische Übertragungsstrecke (7) durch eine optische Richtstrecke, vorzugsweise Laser, gebildet ist.

9. Vorrichtung nach einem der Ansprüche 1 bis 8,
dadurch gekennzeichnet, daß der Sternknoten (8) einen Mikroprozessor (24) aufweist, an den ein Arbeitsspeicher (26) und ein Festwertspeicher (27) angeschlossen sind.

10. Vorrichtung nach Anspruch 9,
dadurch gekennzeichnet, daß der Festwertspeicher (7) ein EPROM, vorzugsweise ein Flash-EPROM ist.

11. Vorrichtung nach Anspruch 9 oder 10,
dadurch gekennzeichnet, daß an den Mikroprozessor (24) ein Kontrollport (28) für E/O-Wandler (12) angeschlossen ist.

12. Vorrichtung nach Anspruch 11,
dadurch gekennzeichnet, daß der Kontrollport (28) Teil des Mikroprozessors (24) ist.

13. Vorrichtung nach Anspruch 11 oder 12,
dadurch gekennzeichnet, daß der Kontrollport (28) Teil eines CAN-Controllers (25) ist.

14. Vorrichtung nach Anspruch 13,
dadurch gekennzeichnet, daß der CAN-Controller (25) Teil des Mikroprozessors (24) ist.

15. Vorrichtung nach einem der Ansprüche 9 bis 14,
dadurch gekennzeichnet, daß der Mikroprozessor (24) über einen CAN-Controller (25) an den CAN-Bus (9) des Sternknotens (8) angeschlossen ist.

16. Vorrichtung nach einem der Ansprüche 11 bis 15,
dadurch gekennzeichnet, daß die E/O-Wandler (12) an den CAN-Bus (9) des Sternknotens (8) angeschlossen sind, vorzugsweise über einen Ankoppelbaustein (29).

17. Vorrichtung nach einem der Ansprüche 1 bis 16,
dadurch gekennzeichnet, daß jedes Element (3) einen Datenein- und -ausgang hat, und daß der Ein- und der Ausgang über jeweils eine optische Übertragungsstrecke (7) an den CAN-Bus (9) des Sternknotens (8) angeschlossen sind.
